Europäisches Patentamt

European Patent Office

Office européen des brevets

(19)

(11) Publication number: **0 168 147**
**A1**

(12) **EUROPEAN PATENT APPLICATION**

(21) Application number: **85303678.8**

(22) Date of filing: **24.05.85**

(51) Int. Cl.⁴: **H 02 J 3/18**

(30) Priority: **25.05.84 ZA 843983**

(43) Date of publication of application:
**15.01.86 Bulletin 86/3**

(84) Designated Contracting States:
**AT BE CH DE FR GB IT LI LU NL SE**

(71) Applicant: **ARTHUR TREVOR WILLIAMS (PROPRIETARY) LIMITED**
**Corner Webber and Pritchard Streets**
**Selby Johannesburg Transvaal(ZA)**

(72) Inventor: **Williams, John Trevor**
**17 Westminster Drive Craighall Park**
**Johannesburg Transvaal(ZA)**

(74) Representative: **Marsh, Roy David et al,**
**Brewer & Son 5-9, Quality Court Chancery Lane**
**London WC2A 1HT(GB)**

(54) **Power factor controller.**

(57) THE INVENTION provides a method of regulating the power factor in an electrical network whereby a plurality of reactive components are provided and adapted to be switched into the network selectively. The method includes the steps of measuring the power factor in the network, determining the corrective reactance required to obtain a predetermined overall corrected power factor, and then switching in the reactive components which approximate the required reactance, into the network.

./...

Croydon Printing Company Ltd

FIG 1

POWER FACTOR CONTROLLER

THIS invention relates to a method and means of regulating the power factor in a consumer network.

It is an object of the present invention to provide substantially automatic power factor regulation in an electrical network.

According to the invention a method of regulating the power factor in an electrical network comprises the steps of providing a plurality of capacitive and/or inductive reactive components, measuring the power factor in the network, determining the corrective reactance required to obtain a predetermined overall corrected power factor, and switching a reactance which equals or approximates such required reactance into the network. For practical purposes the switched reactance will almost invariably be capacitive.

Further according to the invention the method includes the step of determining which reactive components, when summated will approximate the ideal corrective capacitance, and coupling such capacitive components into the network.

It is envisaged that the power factor will be measured by known methods. For example the power factor could be measured by determining the time period between zero crossings of the voltage and current waves of the alternating current supply, and utilizing harmonic filtering to eliminate spurious interferances with measurements. Alternatively the suitable measurement and computation of real power (kW) and apparant power (kVA) could be used to determine the power factor.

In a preferred arrangement according to the invention the determinations and calculations above will be made and controlled by a micro-processor and the method includes the steps of entering the values and/or corrective effects of the capacitive components in a suitable memory facility. Thus in operation the micro-processor will have access to the characteristics of the capacitive components in order to enable it to select the most suitable combination of components for corrective purposes.

It is envisaged that where a capacitive. component malfunctions it will be excluded from use, and a

0168147

suitable indication and/or alarm signal provided.

Yet further according to the invention the method in one embodiment proposes that determination of the power factor and correction if necessary will be effected at predetermined time intervals.    It will    be    appreciated    that    after    an    initial correction, additional corrections may comprise the substitution    of    one    capacitive    component    for another, or the addition or removal of a capacitive component    to    or    from    the    network.    Alternatively, in order to reduce switching, additional corrective switching of capacitive components into or out of the network, after the initial correction may be effected only after the power demand of the system varies by a predetermined amount.    Thus for example after the initial power factor correction sequence, additional capacitive components will be switched into the system only if the demand level rises by a further    percentage,    typically    in    the    order    of 50% (fifty percentum) to 70% (seventy percentum) of the demand during previous correction.

The method also includes the step of summating the collective content of harmonics in the supply and activating an alarm, trip or the like when such sum exceeds a predetermined harmonic level.

Further features of the method of the invention provide for indication and/or alarm signals to be given for various malfunctions such as current input loss, excessively low current, incorrect polarity, voltage loss on a phase, incorrect phase rotation of voltage connections, a switching malfunction in respect of the capacitive components, and where an unacceptable power factor prevails for a predetermined time period.

The invention is further directed to apparatus suitable for use in the method disclosed above comprising means for determining the power factor in an electrical network, means for determining the corrective capacitive or inductive reactance required to provide a predetermined corrected power factor, a plurality of reactive components, and switch means for switching any one or more of the reactive components into the network, in accordance with the corrective reactance required.

The means for determining the power factor could be of a conventional type as described above.

Further according to this aspect of the invention the means for determing the corrective capacitance required is a micro-processor, with access to a memory which includes the values and/or corrective effects of the respective capacitive components.

Also according to the invention means is provided for summating the collective content of harmonics in the supply. When an excess above a predetermined harmonic level arises, an alarm and/or trip functions will be activated.

In order more clearly to illustrate the invention an embodiment thereof is described hereunder purely by way of example with reference to the accompanying drawings wherein:

Figure 1          is a schematic representation of a power factor correction controller; and

Figure 2    is a representation of a display panel for the controller in Figure 1.

In the diagrams the numbers identify the following compents:-

| Number | Component |
| --- | --- |
| 1. | Voltage Conditioning Circuit |
| 2. | Fundamental Voltage Filter |
| 3. | Fundamental Phase Locked Loop Clock |
| 4. | Phase Loss Circuit |
| 5. | Voltage Converter |
| 6. | Waveform Sense Circuit |
| 7. | Analogue To digital Converter |
| 8. | Central Processor Unit |
| 9. | Eprom Memory |
| 10. | Ram memory |
| 11. | Display Driver |
| 12. | Display |

0168147

- 7 -

| | |
|---|---|
| 13. | Control And Function Light Driver |
| 14. | Output Light Driver |
| 15. | Relay Driver |
| 16. | Cos 0 Leading Light |
| 17. | Current Low Light |
| 18. | Step Fault Light |
| 19. | C.T. Fault Light |
| 20. | Phase Loss Light |
| 21. | Harmonics Light |
| 22. | Step Lights (6 Off) Or Step Lights (5 Off) Plus Inhibit Light |
| 23. | Alarm Light |
| 24. | Step Relays (6 Off) |
| 25. | Alarm Relay |
| 26. | Power Supply Unit |
| 27. | Current Conditioning Circuit |
| 28. | Fundamental Current Filter |
| 29. | Fundamental Current Converter |
| 30. | Harmonic Current Filter |
| 31. | Harmonic Current Converter |
| 32. | Auto-Ranging Circuit |
| 33. | Reference Inputs |
| 34. | Inhibit Control |

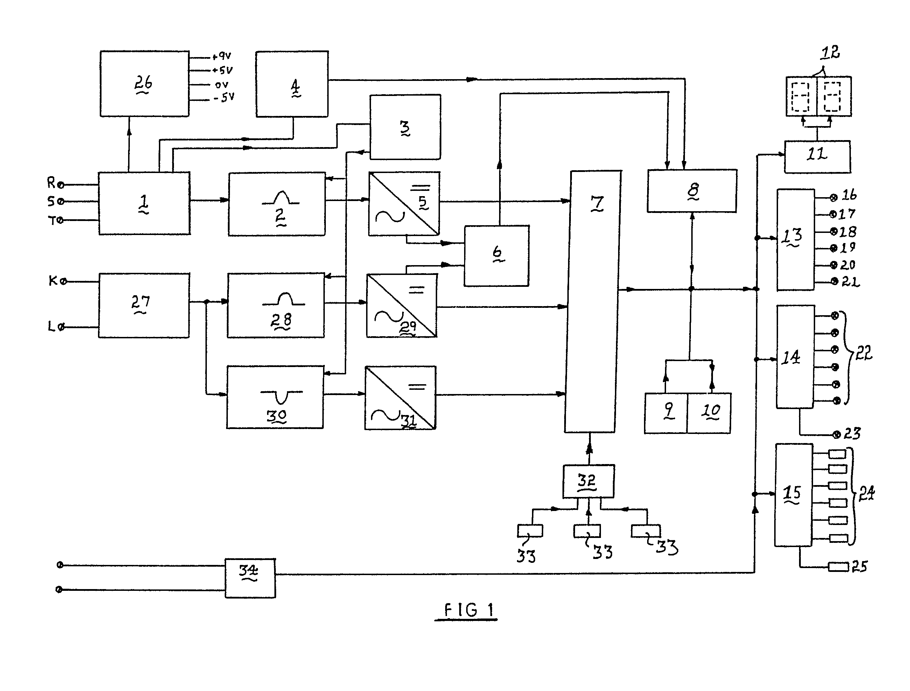

With reference to Figure 1 a controller adapted to switch a required combination of reactive components into a consumer network for purposes of regulating the power factor comprises a voltage input shown at R,S,T which is linked via a voltage conditioning circuit, a voltage filter 2 and rectifier 5 to a multiplex AD convertor 7. A current input K,L is likewise linked via a current conditioning circuit 27, a fundamental current filter 28, a harmonic filter 30, and fundamental and harmonic current converters 29 and 31 respectively to a convertor 7. A waveform sense circuit 6 provides phase signals to a central-processor unit 8 enable the latter which is interfaced with the convertor 7, to determine the power factor in the network. The power factor is measured by determining the time period between the zero crossings of the voltage and current waves. The power factor will be displayed on a conventional seven segment LED display 12.

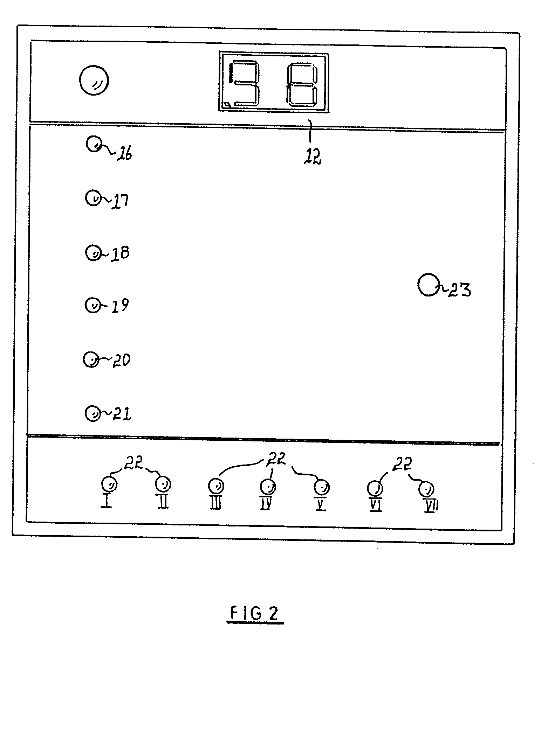

It is a feature of the invention that the processor unit 8 will determine the value of the total capacitive or inductive reactance required to provide a predetermined power factor for the network. It is for example envisaged that a power factor of 0,98 will be set as the target power factor. In the circuit illustrated six capacitive components are provided and adapted to be switched by means of relays shown at 24 in any desired combination. LED's i to vi, Figure 2 will indicate which capacitive components are coupled in the network at any particular time. The values of the capacitive components as well as the individual corrective effect of each component will be stored in a ram memory 10 for the micro-processor 8. The operating program of the processor 20 will be stored in a suitable Eprom memory shown at 9. The corrective effect of a capacitive component can be determined on installation of the controller by switching each capacitive component into the network and storing the result in the memory 10.

In a preferred arrangement of the invention the central-processor unit 8 will make an initial adjustment to the power factor in the network by selecting a combination of the capacitive components. Thereafter readjustment can be effected at predetermined time intervals, for example ten second periods, and it will be appreciated that the processor unit can either substitute capacitive components, add additional components to the network, or switch components out of the circuit. Alternatively in order to minimize switching, additional correction after the initial correction could be effected only once the system demand level rises over a predetermined level of that experienced during initial correction. For example the arrangement could be such that additional correction is not effected until the system demand level rises over say 70% (seventy percentum) of that during initial correction. Once the 70% (seventy percentum) level is reached switching will again occur freely to obtain the predetermined power factor.

Further features of the invention provides for LED indicators 16 to 21 to indicate various system conditions and these are operated through an LED driver 13. In a preferred arrangement it is envisaged that these will indicate a cos 0 leading condition, a current input loss, a condition where the current is below a predetermined minimum operating level, where polarities are incorrect, where a voltage loss on a phase occurs, where phase rotation of a voltage is incorrect and an excessive harmonics condition. An audible alarm and light 23 could also be activated where any one or more of the above conditions occur, and in addition where for example there is failure of a capacitive component or where the power factor remains at an unacceptable level for a predetermined period etc.

Further components of the controller in Figure 1 comprise a phase loss and reversal detector 4 which provides a signal on occurance to the microprocessor 20 for display on one of the LED's 16 to 21. An inhibit control is shown at 34.

The other components in the schematic diagram comprise reference inputs 33 and an auto-ranging circuit coupled to the convertor 7. A power supply unit is shown at 26.

Further components, not shown, could comprise manual condition settings in the form of internal pots, and manual overriding switches for the relays 24. The overriding switches could be provided externally on the display of the unit, and the operation of a switch will sequentially switch relays into the network while operation of the other switch will sequentially switch relays out of the network.

Doubtless many variations of the invention exist which differ in matters of detail only but do not depart from the principles set out in the consistory clauses.

- 13 -

0168147

CLAIMS

1. A method of regulating the power factor in an electrical network comprising the steps of providing a plurality of capacitive and/or inductive reactive components, measuring the power factor in the network, determining the corrective reactance required to obtain a predetermined overall corrected power factor, and switching a reactance which equals or approximates such required reactance into the network.

2. The method according to claim 1 including the step of determining which reactive components, when summated will approximate the ideal corrective capacitance, and coupling such capacitive components into the network.

3. The method according to claim 1 or claim 2 wherein the power factor is measured by determining the time period between zero crossings of the voltage and current waves of the alternating current supply, and utilizing harmonic filtering to eliminate spurious interferances with measurements.

4. The method according to claim 1 or claim 2 wherein the power factor is measured by measuring and comparing real power (kW) and apparant power (kVA).

5. The method according to any one of claims 1 to 4 wherein the measurements and determinations are made and controlled by a micro-processor and the method includes the steps of entering the values and/or corrective effects of the reactive components in a suitable memory facility.

6. The method according to claim 5 wherein the micro-processor switches each reactive component into the network to determine the values and/or corrective effects of each reactive components, and stores such information in the memory facility.

7. The method according to any one claims 1 to 6 wherein a reactive component which malfunctions is excluded from use and a suitable indication and/or alarm signal provided.

8. The method according to any one of claims 1 to 7 wherein the determination of the power factor and correction if necessary is effected at predetermined time intervals.

9. The method according to any one of claims 1 to 8 wherein after an initial correction, additional corrections are made comprising the steps of substituting one reactive component for another or the additional or removal of reactive components to or from the network.

10. The method according to any one of claims 1 to 7 or 8 to 9 wherein additional corrective switching of reactive components into or out of the network after the initial correction, is effected upon a variation of the power demand of the network by a predetermined amount.

- 16 -

0168147

11. The method according to claim 10 wherein additional corrective switching of reactive components into or out of the network after the initial correction is effected only after the power demand of the network varies by a predetermined value selected to be between 40% to 70% of the demand during the previous correction.

12. The method according to any one of claims 1 to 11 including the step of summating the collective content of harmonics in the supply.

13. The method according to claim 12 including the step of activating an alarm and/or trip device when the sum of the harmonics exceeds a predetermined level.

14. Apparatus suitable for use in the method claimed in any one of claims 1 to 13 comprising means for determining the power factor in an electrical network, means for determining the corrective capcitive or inductive reactance required to provide a predetermined corrected power factor, a plurality of reactive components, and switch means for switching any one or more of the reactive components into the network, in accordance with the corrective reactance required.

15. Apparatus according to claim 1 4 wherein the means for determining the corrective reactance required is a micro-processor, with access to a memory which includes values and/or corrective effects of the respective reactive components.

16. Apparatus according to claim 14 or claim 15 including means for summating the collective content of harmonics in the supply, and means for activating an alarm and/or trip device where the sum of the harmonics succeeds a predetermined level.

FIG 1

0168147

FIG 2

**European Patent Office**

**EUROPEAN SEARCH REPORT**

EP 85 30 3678

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| X | FR-A-2 530 090 (COMPAGNIE CONTINENTALE D'EQUIPEMENTS ELECTRIQUES CEE) * Page 4, line 14 - page 8, line 7; figures * | 1,2,5, 6,8,9 | H 02 J 3/18 |
| X | FR-A-2 473 749 (LGZ LANDIS & GYR) * Page 2, line 36 - page 6, line 23; figure 1 * | 1,2,5, 6,8,9 | |
| A | US-A-4 204 150 (H.O.P. CONSULAB INC.) * Abstract; figure 1 * | 1,2,4 | |
| A | US-A-4 055 795 (H.O.P. CONSULAB INC.) * Abstract; figure 1 * | 1-3 | |
| A | GB-A-2 077 528 (WESTINGHOUSE) * Abstract; figure 4 * | 1,2,8-11 | H 02 J 3/00  G 05 F 1/00 |
| A | US-A-4 317 076 (HILSCHER-CLARKE) * Abstract; figure 1 * | 1,2,9 | |
| A | DE-B-1 241 905 (ERO-STARKSTROM) * Column 3, line 22 - column 5, line 31; figures * | 1-3,9 | |

TECHNICAL FIELDS SEARCHED (Int. Cl.4)

The present search report has been drawn up for all claims

| Place of search | Date of completion of the search | Examiner |
|---|---|---|
| THE HAGUE | 13-09-1985 | ZAEGEL B.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82